# EUROPÄISCHE PATENTANMELDUNG

(11) **EP 0 924 162 A2**
(43) Veröffentlichungstag der Anmeldung: **23.06.1999**
(21) Anmeldenummer: 98123341.4
(22) Anmeldetag: 08.12.1998
(51) Int. Cl.: C01B 3/32, C01B 3/50

(54) **Wasserstoffabtrennmembran, damit ausgerüstete Methanolreformierungsanlage und Betriebsverfahren hierfür**

(30) Priorität: 16.12.1997 DE 19755813; 23.12.1997 DE 19757506
(71) Anmelder: DBB Fuel Cell Engines GmbH, 73230 Kirchheim/Teck-Nabern (DE)
(72) Erfinder: Autenrieth, Rainer, 89155 Erbach (DE); Poschmann, Thomas, 89073 Ulm (DE); Wieland, Steffen, 70180 Stuttgart (DE); Heil, Dietmar, 88477 Hörenhausen (DE); Boneberg, Stefan, 89134 Blaustein (DE)
(74) Vertreter: Kocher, Klaus-Peter Dipl.-Phys

(57) **Zusammenfassung**

Die Erfindung bezieht sich auf eine Membran zur Abtrennung von Wasserstoff aus einem Gasgemisch, auf eine damit ausgerüstete Methanolreformierunganlage sowie auf ein Verfahren zum Betrieb einer solchen Anlage.

Erfindungsgemäß ist die Wasserstoffabtrennmembran wenigstens einseitig mit einer Katalysatorschicht für einen vorgegebenen katalytischen Verbrennungsproezß versehen. Eine damit ausgerüstete Methanolreformierungsanlage läßt sich schnell auf Betriebstemperatur bringen, indem die Wasserstoffabtrennmembran mittels Durchführung des katalytischen Verbrennungsprozesses direkt aufgeheizt wird.

Verwendung z.B. in Wasserstoffabtrennstufen von Methanolreformierungsanlagen brennstoffzellenbetriebener Kraftfahrzeuge zur Bereitstellung von Wasserstoff für die Brennstoffzellen.

## Beschreibung

Die Erfindung bezieht sich auf eine Membran zur Abtrennung von Wasserstoff aus einem Gasgemisch, auf eine mit einer solchen Membran ausgerüstete Methanolreformierungsanlage sowie auf ein Verfahren zum Betrieb einer solchen Anlage.

Eine bekannte Technik zur Gewinnung hochreinen Wasserstoffs besteht darin, aus geeigneten Ausgangssubstanzen mittels einer entsprechenden chemischen Reaktion ein wasserstoffhaltiges Gasgemisch zu erzeugen und aus diesem den Wasserstoff über eine Wasserstoffabtrennmembran abzutrennen, die so ausgelegt ist, daß von den Gasgemischkomponenten spezifisch nur der Wasserstoff durch sie hindurchzudiffundieren vermag. Ein wichtiges Anwendungsgebiet sind Reformierungsanlagen zur Wasserstoffgewinnung, z.B. Anlagen zur Wasserdampfreformierung von Methanol. Durch die Reformierungsreaktion eines geeigneten Kohlenwasserstoffs, worunter der Einfachheit halber im folgenden auch Kohlenwasserstoffderivate verstanden werden sollen, wie Methanol, entsteht ein wasserstoffhaltiges Reformatgas, von dem der Wasserstoff mittels einer Wasserstoffabtrennstufe abgetrennt wird, die als wesentliches Element die Wasserstoffabtrennmembran enthält. In Methanolreformierungsanlagen dieser Art, wie sie in den Patentschriften US 4.981.676 und US 5.229.102 offenbart sind, ist die Wasserstoffabtrennstufe in die Reformierungsreaktorstufe dadurch integriert, daß die Wasserstoffabtrennmembran eine den Reformierungsreaktionsraum begrenzende Seitenwand des Reaktors bildet. Alternativ kann die Wasserstoffabtrennstufe auch als der Reaktorstufe nachgeschaltete, eigenständige Einheit realisiert sein.

In jüngerer Zeit werden vermehrt Reformierungsanlagen zur Wasserstoffgewinnung für den mobilen Einsatz vorgeschlagen, speziell zur Gewinnung von Wasserstoff für die Brennstoffzellen eines brennstoffzellenbetriebenen Kraftfahrzeuges. Dies hat den Vorteil, daß keine aufwendige Wasserstoffspeicherung im Fahrzeug erforderlich ist, sondern stattdessen der als Ausgangsmaterial für die Reformierungsreaktion verwendete Kohlenwasserstoff, insbesondere Methanol, in flüssiger Form mitgeführt wird, was beträchtlich unproblematischer ist. Speziell für diesen Einsatzzweck in Kraftfahrzeugen ist es wünschenswert, möglichst rasch nach dem Start des Fahrzeugs und damit der wasserstoffbereitstellenden Refomierungsanlage Wasserstoff durch die Anlage in ausreichender Menge zur Verfügung stellen zu können, damit das Brennstoffzellensystem entsprechend schnell die geforderte Fahrzeugantriebsleistung zur Verfügung stellen kann.

Da die meisten wasserstoffliefernden Reformierungsreaktionen bei einer gegenüber Raumtemperatur erhöhten Temperatur ablaufen, wie z.B. die für den Einsatz in Fahrzeugen besonders wichtige Wasserdampfreformierung von Methanol, ist es bereits bekannt, den Reformierungsreaktionsraum wenigstens während Kaltstartphasen zu beheizen. So besitzt die in der oben erwähnten US 4.981.676 offenbarte Anlage eine Gasbrennereinheit, in der ein geeignetes, zugeführtes Brennstoff/Luft-Gemisch bei offener Flamme an der Außenseite einer zylindrischen Außenwand des zylinderringförmigen Reaktionsraums verbrannt wird, der radial nach innen von der hohlzylindrisch gestalteten Wasserstoffabtrennmembran begrenzt wird. Alternativ zu Brennern mit offener Flamme ist es bekannt, den Reaktionsraum unter Anwendung eines katalytischen, flammenfreien Verbrennungsprozesses oder durch Anströmen mit einem außerhalb des Reaktors erzeugten, heißen Gas- oder Flüssigkeitsstrom zu beheizen. Eine weitere bekannte Technik ist das Anordnen einer externen Heizung für den Reaktor, wie in der Patentschrift US 5.674.301 offenbart.

In der Offenlegungsschrift JP 06-345408 A ist ein Methanolreformierungsreaktor vom Plattenstapeltyp offenbart, bei dem eine Wasserstoffabzugsschicht beidseitig von einer Membranplatte begrenzt ist, auf deren gegenüberliegender Seite jeweils eine Reformierungskatalysatorschicht anschließt. An die Reformierungskatalysatorschichten grenzt auf deren der Wasserstoffabzugs-Membranplatte gegenüberliegenden Seiten je eine Verbrennungskatalysatorschicht an. In diesen Verbrennungskatalysatorschichten kann eine katalytische Verbrennung durchgeführt werden, um den Reaktor und insbesondere die den Reformierungsreaktionsraum bildenden Reformierungskatalysatorschichten zu beheizen.

Der Erfindung liegt als technisches Problem die Bereitstellung eienr Wasserstoffabtrennmembran, einer damit ausgerüsteten Methanolreformierungsanlage und eines Betriebsverfahrens für dieselbe mit verbessertem Kaltstartverhalten zugrunde, indem ein möglichst rasches Erreichen der Betriebstemperatur ermöglicht wird.

Die Erfindung löst dieses Problem durch die Bereitstellung einer Wasserstoffabtrennmembran mit den Merkmalen des Anspruchs 1, einer Methanolreformierungsanlage mit den Merkmalen des Anspruchs 3 sowie eines Betriebsverfahrens hierfür mit den Merkmalen des Anspruchs 4. Charakteristischerweise ist die Wasserstoffabtrennmembran wenigstens auf einer Seite mit einer Katalysatorschicht für einen vorgegebenen katalytischen Verbrennungsprozeß versehen. Durch Anströmen der Membran auf dieser Seite mit den Reaktionspartnern des betreffenden katalytischen Verbrennungsprozesses läßt sich unter der Wirkung der Katalysatorschicht dort dieser katalytische Verbrennungsproezß durchführen, der auf diese Weise direkt und unmittelbar die Wasserstoffabtrennmembran aufheizt. Bei einer Methanolreformierungsanlage nach Anspruch 3 läßt sich folglich deren Wasserstoffabtrennstufe mittels der direkten, flammenlosen Beheizung der Wasserstoffabtrennmembran sehr rasch durch das Verfahren nach Anspruch 4 auf Betriebstemperatur bringen.

Wenn die Wasserstoffabtrennstufe mit der Reaktorstufe integriert ist, wird dadurch auch der Reaktionsraum mittelbar aufgeheizt.

Zusätzlich kann je nach Bedarf eine unmittelbare Beheizung auch des Reaktionsraums in einer der herkömmlichen Weisen zweckmäßig sein. Während bei der herkömmlichen Vorgehensweise, nur den Reaktionsraum direkt zu beheizen, ein Wärmeverlust des vom Reaktionsraum in die Wasserstoffabtrennstufe gelangenden Reformierungsproduktgases während Kaltstartphasen dadurch auftritt, daß dieses zunächst die noch kalte Wasserstoffabtrennmembran aufheizen muß, läßt sich dieser Wärmeverlust durch die Fähigkeit der erfindungsgemäßen Membran, direkt katalytisch beheizt werden zu können, vorteilhafterweise vermeiden. Dadurch kann die Anlage insgesamt schneller auf Betriebstemperatur gebracht werden, was besonders im mobilen Einsatz in brennstoffzellenbetriebenen Kraftfahrzeugen erwünscht ist. Gerade bei diesem Anwendungsfall kann es erforderlich sein, die Wasserstoffabtrennstufe nach einer jeweiligen Anlagenabschaltung zunächst in einen abgekühlten Ruhezustand zu versetzen und von dort aus wieder zu aktivieren, was erfindungsgemäß sehr schnell und mit vergleichsweise geringem Aufwand erfolgen kann.

Eine nach Anspruch 2 weitergebildete Wasserstoffabtrennmembran ist mit einer Katalysatorschicht beschichtet, die einen katalytischen Verbrennungsprozeß für Wasserstoff und/oder Methanol katalysiert. Dies ist besonders für wasserstofferzeugende Reformierungsanlagen und speziell Methanolreformierungsanlagen von Vorteil, da bei diesen der Wasserstoff bzw. das Methanol systembedingt vorhanden ist und daher kein zusätzlicher anderer Brennstoff für den katalytischen Verbrennungsprozeß zur Aufheizung der Membran bereitgestellt werden muß.

Eine vorteilhafte Ausführungsform der Erfindung ist in den Zeichnungen dargestellt und wird nachfolgend beschrieben. Hierbei zeigen:
- Fig. 1: eine schematische Blockdiagrammdarstellung des erfindungswesentlichen Teils einer für den Einsatz in einem brennstoffzellenbetriebenen Kraftfahrzeug geeigneten Methanolreformierungsanlage im Kaltstart-Betriebszustand und
- Fig. 2: eine Ansicht entsprechend Fig. 1, jedoch im warmgelaufenen Betriebszustand der Anlage.

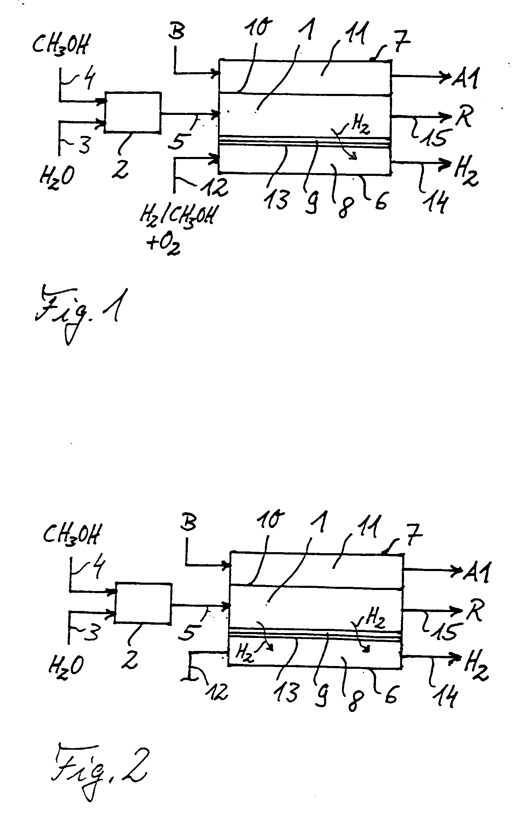

Fig. 1 zeigt schematisch eine Methanolreformierungsanlage zur Wasserstoffgewinnung für ein Brennstoffzellensystem eines Kraftfahrzeuges mit ihren hier interessierenden Komponenten im Betrieb während einer Kaltstartphase. Die Anlage beinhaltet als zentralen Teil eine Reaktorstufe mit einem Reaktionsraum 1, der mit einer zur Katalysierung einer Wasserdampfreformierungsreaktion von Methanol geeigneten Katalysatorpelletschüttung befüllt ist. Der Reaktorstufe ist ein Verdampfer 2 vorgeschaltet, dem über eine erste Zufuhrleitung 3 flüssiges Wasser und über eine zweite Zufuhrleitung 4 flüssiges Methanol aus jeweiligen, nicht gezeigten Vorratstanks zugeführt wird. Die beiden Flüssigkeiten werden im Verdampfer 2 zu einem Methanol/Wasserdampf-Gemisch 5 verdampft, das mit ausreichend hoher Temperatur in den Reaktionsraum 1 eingeleitet wird.

Seitlich an den Reaktionsraum 1 schließt sich auf einer Seite eine Wasserstoffabtrennstufe 6 und auf der anderen Seite ein katalytischer Brenner 7 an, die beide mit dem Reaktionsraum 1 zu einer gemeinsamen Reformierungsreaktoreinheit integriert sind. Die Wasserstoffabtrennstufe 6 beinhaltet einen Wasserstoffsammelraum 8 und eine Wasserstoffabtrennmembran 9, welche als Begrenzungswand des Reaktionsraums 1 gegenüber dem Wasserstoffsammelraum 8 fungiert. Die Wasserstoffabtrennmembran 9 ist so gebaut, daß sie von den im Reaktionsraum 1 vorliegenden Gasbestandteilen selektiv nur den erzeugten Wasserstoff hindurchdiffundieren läßt. Sie besteht dazu aus einem geeigneten Material, z.B. aus Palladium oder einer Palladium-Legierung. Auf der anderen Seite ist der Reaktionsraum 1 mittels einer gasundurchlässigen, jedoch gut wärmeleitfähigen Trennwand 10 von einem Heizraum 11 des katalytischen Brenners 7 getrennt. Der Verdampfer 2 besitzt zur Erzeugung des Methanol/Wasserdampf-Gemischs 5 eine geeignete Heizeinrichtung, z.B. ein elektrisches Heizelement oder einen Brenner, wobei in letzterem Fall dieser verdampferseitige Brenner mit dem an den Reaktionsraum 1 angrenzenden katalytischen Brenner 7 zu einer gemeinsamen Brennereinheit integriert sein kann, falls gewünscht.

Die Wasserstoffabtrennmembran 9 ist charakteristischerweise auf ihrer dem Wasserstoffsammelraum 8 zugewandten Seite mit einer Katalysatorschicht 13 beschichtet, die einen flammenlosen Verbrennungsprozeß von Wasserstoff und/oder Methanol mit Sauerstoff katalysiert. Dabei kann die Katalysatorschicht 13 aus irgendeinem der zu diesem Zweck bekannten Materialien bestehen, z.B. aus Platin, wobei sie so aufgebracht ist, daß dadurch die Wasserstoffdiffusion durch die Membran 9 hindurch nicht merklich beeinträchtigt wird. Dies ist z.B. dadurch realisierbar, daß ein gleichfalls wasserstoffdurchlässiges Katalysatormaterial verwendet oder die Katalysatorschicht 13 mit genügend geringer Dicke und/oder nicht ganzflächig, sondern als poröse Schicht oder in strukturierter Form unter Belassung unbeschichteter Flächenbereiche, z.B. als Gittermuster, aufgebracht wird. Mit Hilfe der Katalysatorschicht 13 kann die Wasserstoffabtrennmembran 9 direkt aufgeheizt werden, indem die solchermaßen beschichtete Membranseite mit dem entsprechenden Verbrennungsgasgemisch, d.h. einem Gemisch von Sauerstoff oder einem sauerstoffhaltigen Gas einerseits sowie Wasserstoff und/oder Methanol andererseits, angeströmt wird. Bei Bedarf kann eine beidseitig mit einer solchen Katalysatorschicht versehene Membran verwendet und diese beidseitig mit dem zugehörigen Verbrennungsgasgemisch angeströmt werden. Außerdem können mehrere Membranen in Platten- oder Scheibenfrom zu einem Membranmodul zusammengefaßt werden.

Während der in Fig. 1 illustrierten Betriebssituation einer Kaltstartphase wird in den Heizraum 11 des katalytischen Brenners 7 ein geeigneter Brennstoff B zugeführt und dort flammenlos katalytisch verbrannt. Als Brennstoff B kann das flüssig im Fahrzeug mitgeführte Methanol oder während einer vorangegangenen Betriebsphase erzeugter Wasserstoff oder ein beliebiges anderes Material verwendet werden. An der Ausgangsseite des Brennerheizraums 11 wird das zugehörige Verbrennungsgas A1 abgeführt. Die im katalytischen Brenner 7 erzeugte Verbrennungswärme gelangt über die wärmeleitfähige Trennwand 10 in den Reaktionsraum 1 und heizt dort die Katalysatorpelletschüttung auf eine zur Wasserdampfreformierung von Methanol ausreichende Betriebstemperatur auf. Gleichzeitig wird über eine Einlaßleitung 12 ein katalytisch verbrennbares Gasgemisch aus Sauerstoff einerseits und Wasserstoff und/oder Methanol andererseits in den Wasserstoffsammelraum 8 eingeleitet. Dieses Gasgemisch verbrennt katalytisch und damit flammenlos an der mit der entsprechenden Katalysatorschicht 13 versehenen, dem Wasserstoffsammelraum 8 zugewandten Seite der Wasserstoffabtrennmembran 9. Die daduch erzeugte Verbrennungswärme heizt direkt die Wasserstoffabtrennmembran 9 auf Betriebstemperatur auf.

Der Verdampfer 2 führt dem Reaktionsraum 1 das Methanol/Wasserdampf-Gemisch 5 mit einer in dieser Kaltstart-Betriebsphase noch relativ geringen Rate zu, die mit steigender Betriebstemperatur der Reaktorstufe gesteigert werden kann, so daß das zugeführte Gemisch stets vollständig reformiert wird. Ab einer Temperatur von ungefähr 100° C gelangt der dabei im Reaktionsraum 1 entstehende Wasserstoff durch die Wasserstoffabtrennmembran 9 in den Wasserstoffsammelraum 8, aus dem er über eine Auslaßleitung 14 abgeführt und beispielsweise zu einem Brennstoffzellensystem weitergeleitet wird. Hingegen verhindert die Wasserstoffabtrennmembran 9 den Übertritt der anderen Bestandteile des im Reaktionsraum 1 erzeugten Reformierungsproduktgases, insbesondere des als Brennstoffzellengift wirkenden Kohlenmonoxids, so daß diese Restbestandteile R über eine Auslaßleitung 15 den Reaktionsraum 1 verlassen. Vor dem Erreichen der notwendigen Betriebstemperatur kann der Wasserstoff im katalytischen Brenner 7 verbrannt werden.

Durch die direkte Beheizung des Reaktionsraums einerseits und der Wasserstoffabtrennstufe 6, insbesondere der Wasserstoffabtrennmembran 9, andererseits erreicht die Reformierungsanlage vergleichsweise rasch ihre Betriebstemperatur, typischerweise innerhalb weniger Sekunden. Sobald dies der Fall ist, wird die Anlage auf den in Fig. 2 gezeigten Betrieb umgestellt. Die Einleitung des Gasgemischs aus Sauerstoff sowie Wasserstoff und/oder Methanol in den Wasserstoffsammelraum 8 zwecks katalytischer Verbrennung an der Wasserstoffabtrennmembran wird beendet, so daß sich dann nur noch der im Reaktionsraum 1 gebildete und selektiv durch die Membran 9 hindurchdiffundierte Wasserstoff im Wasserstoffsammelraum 8 sammelt und über den zugehörigen Auslaß 14 weitergeleitet wird. Da die Reaktorstufe nun ihre Betriebstemperatur und damit ihr volles Leistungsvermögen erreicht hat, kann im Verdampfer 2 Wasser und Methanol nunmehr auch mit einer hohen Rate, abhängig vom jeweiligen Leistungsbedarf, verdampft und vorzugsweise überhitzt als entsprechendes Gemisch 5 dem Reaktionsraum 1 zugeführt werden. Da die Wasserdampfreformierung von Methanol endotherm verläuft, wird der Betrieb des katalytischen Brenners 7 aufrechterhalten, um den Reaktionsraum 1 auf der hierfür günstigsten Betriebstemperatur zu halten. Zur Aufrechterhaltung der Betriebstemperatur der Wasserstoffabtrennmembran 9 genügt in diesem warmgelaufenen Betriebszustand der Anlage der Wärmetransport vom katalytischen Brenner 7 und dem überhitzt in den Reaktionsraum zugeführten Methanol/Wasserdampf-Gemisch 5, was dadurch begünstigt wird, daß die Membran 9 direkt an den Reaktionsraum 1 angrenzt.

Es versteht sich, daß eine Wasserstoffabtrennmembran der erfindungsgemäßen Art nicht nur, wie gezeigt, in Methanolreformierungsanlagen, speziell für brennstoffzellenbetriebene Kraftfahrzeuge, sondern auch in anderen Anwendungsgebieten überall dort nutzbringend eingesetzt werden kann, wo Bedarf an einer direkten Aufheizung der Membran mittels eines katalytischen Verbrennungsprozesses besteht. Dabei kann die Membran, wie beschrieben, Teil einer mit der Reaktorstufe integriert gebildeten Wasserstoffabtrennstufe sein oder alternativ in einer von der Reaktorstufe räumlich separierten Wasserabtrennstufe verwendet werden. Durch den katalytischen Verbrennungsprozeß an der Membran sind keine anderweitigen zusätzlichen Mittel zur Beheizung derselben, wie z.B. eine elektrische Heizeinrichtung, erforderlich.

## Patentansprüche

1. Membran zur Abtrennung von Wasserstoff aus einem Gasgemisch, insbesondere zur Verwendung in einer Methanolreformierunganlage,
**dadurch gekennzeichnet, daß**
sie wenigstens einseitig mit einer Katalysatorschicht (13) für einen vorgegebenen katalytischen Verbrennungsprozeß versehen ist.

2. Membran nach Anspruch 1, weiter
**dadurch gekennzeichnet, daß**
die Katalysatorschicht (13) aus einem Material besteht, das die Verbrennung von Wasserstoff und/oder Methanol mit Sauerstoff katalysiert.

3. Methanolreformierungsanlage mit
- einer Wasserstoffabtrennstufe (6) zur Abtrennung von im Produktgas der Methanolreformierungsreaktion enthaltenem Wasserstoff,
**dadurch gekennzeichnet, daß**
- die Wasserstoffabtrennstufe (6) eine Wasserstoffabtrennmembran (9) nach Anspruch 1 oder 2 aufweist.

4. Verfahren zum Betrieb einer Methanolreformierungsanlage,
**dadurch gekennzeichnet, daß**
es zum Betrieb einer Methanolreformierungsanlage nach Anspruch 3 dient und dabei während Kaltstartphasen vor Erreichen der Betriebstemperatur der Anlage der vorgegebene katalytische Verbrennungsprozeß an der mit der Katalysatorschicht (13) versehenen Seite der Wasserstoffabtrennmembran (9) durchgeführt wird, wozu diese Katalysatorschicht (13) der Membran (9) mit dem zugehörigen, katalytisch zu verbrennenden Gasstrom angeströmt wird.
